# EUROPEAN PATENT APPLICATION

(11) **EP 4 223 817 A1**
(43) Date of publication of application: **09.08.2023**
(21) Application number: 22154899.3
(22) Date of filing: 03.02.2022
(51) Int. Cl.: C08G 18/28, C08G 18/78, C09D 163/00

(54) **LOW TEMPERATURE CURING EPOXY-URETHANE COMPOSITIONS**

(71) Applicant: Covestro LLC, Pittsburgh, PA 15205 (US)
(72) Inventor: The designation of the inventor has not yet been filed
(74) Representative: Levpat

(57) **Abstract**

Provided is a curable coating composition comprising a reaction product of an epoxyfunctional urethane compound and an amine-curing agent, wherein the curable coating composition cures between ambient temperature and 0 °C. Also provided is a process comprising applying the composition according to the previous sentence to a substrate and curing the composition. Coatings made from the curable composition may be applied to a variety of substrates.

## Description

### FIELD OF THE INVENTION

The present invention relates in general to polymers, and more specifically, to thermosetting compositions made from glycidyl carbamate resins.

### BACKGROUND OF THE INVENTION

High performance paint and coating systems are needed for many applications ranging from aircraft, ships, chemical plants, flooring, bridges, and many others. Although there are many coatings binder systems available, the two most prominent are epoxy coatings and polyurethane coatings.

Epoxy resin systems are often used as primers because they provide good adhesion to most substrates and provide a barrier for anticorrosion. A typical epoxy system involves a bisphenol-A (BPA) based epoxy resin that is cured with a multifunctional amine-curing agent. Typically, liquid BPA epoxy resins are used such as EPON 828 from Hexion or DER 331 from Olin Chemicals. Amine-curing agents can be simple compounds such as bis(p-amino cyclohexyl) methane (PACM), isophorone diamine (IPDA) or more complex amine compounds such as polyamide resins, polyamidoamine resins, polyphenalkamine resins, or epoxy resin adducts. Because the reactions between the amine-curing agent and the epoxy resin start as soon as the two ingredients are mixed, these materials are provided separately as two-component systems (2K) which are mixed just prior to application. The time after mixing the components during which the coating can still be applied is known as the "pot life". Sometimes the pot life is defined as the time for the viscosity to double; however, the pot life for any given coating system is that time where the viscosity is suitable for application. More information about epoxy resin technology can be found in various reference materials including B. Ellis, ed., Chemistry and Technology of Epoxy Resins, Springer Science, 1993; H. Panda, Epoxy Resins Technology Handbook, 2nd Revised Edition, Asia Pacific Business Press, 2019; C. May, Epoxy Resins: Chemistry and Technology, 2nd Edition, Routledge, 2018.

In addition to amines, epoxy resins may also react with themselves (homopolymerization), anhydrides, phenols, and/or thiols. An epoxy formulation may contain multiple different kinds of curing agents as well as the right conditions for homopolymerization.

Polyurethane coatings represent a class of high-performance systems that can be used for a number of different applications. Polyurethanes are highly desired for their durability, toughness, and abrasion resistance, which is believed to be a result of extensive hydrogen bonding. Two component (2K) polyurethane coatings involve the reaction of a polyol with a polyisocyanate. As with epoxy resins, the curing reactions start as soon as the components are mixed; therefore, the coating system is supplied in two packages that are mixed just prior to application. The polyol can be an acrylic polyol, a polyester polyol, a polyether polyol, a polyurethane polyol or a polycarbonate polyol. The polyisocyanate component can be based on aromatic or aliphatic building blocks. Aromatic polyisocyanates react very rapidly, although aliphatic polyisocyanates react slower; however, it is possible to accelerate the curing with the use of catalysts. Aliphatic polyisocyanates are preferred for use where the coating requires weathering performance. More information about polyurethanes and their use in coatings can be found in various reference materials including "Szycher's Handbook of Polyurethanes", 2nd edition, CRC Press, 2012; U. Meier-Westhues, "Polyurethanes: Coatings, Adhesives and Sealants", Vincentz Network, 2007.

However, due to concerns about worker exposure to isocyanates, there is a desire to be able to make polyurethanes without using isocyanates at the point of application. A number of approaches have been explored including cyclic carbonate-amine chemistry and carbamate-aldehyde chemistry, among others (Polym. Bull. 2019, 76 (6), 3233-3246; ChemSusChem 2019, 12 (15), 3410-3430; Eur. Polym. J. 2017, 87, 535-552; RSC Adv. 2013, 3 (13), 4110-4129; Polymer. Adv. Tech. 2015, 26 (7), 707-761).

In making new coatings systems, it is desirable to maintain the polyurethane character as the hydrogen bonding it affords imparts significant toughness, durability, and abrasion resistance. Therefore, a system that results in crosslinked polyurethane materials, but uses a different crosslinking chemistry is desirable.

As described previously, epoxy chemistry is well known and used extensively in the field of thermosetting materials for applications in coatings, composites, and adhesives. Having an epoxy-functional polyurethane can meet this need.

One approach to making epoxy-functional polyurethanes is that of glycidyl carbamate-functional resins. Glycidyl carbamate-functional resins are made by reacting isocyanate-functional resins with glycidol.

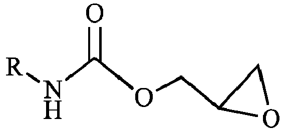

Glycidyl carbamates are typically synthesized by the reaction of a polyisocyanate with glycidol. In U.S. Pat. No. 2,830,038, Pattison disclosed the synthesis of linear epoxy urethane compounds by the reaction of polytetramethylene ether glycol with an excess of toluene-2,4-diisocyanate (TDI), followed by reaction with glycidol. The product is mixed with a diamine and cured to form an elastomer.

Doss, in U.S. Pat. No. 3,440,230, teaches the synthesis of a glycidyl carbamate resin by the reaction of a mixture of 2,4- and 2,6-toluene diisocyanate (TDI) with glycidol. The product can be cured at elevated temperature (180 °C for 30 minutes) between aluminum strips and forms an adhesive. Pittman et al. disclose glycidol-modified polyurethanes as treatments for textiles in U.S. Pat. No. 3,814,578. To prepare the glycidol-modified polyurethane, an isocyanate-terminated prepolymer was reacted with glycidol. The product is applied to a fabric either from solvent or as an aqueous emulsion and cured.

Several researchers have studied the rearrangement reactions of glycidyl carbamates. In an early report, Iwakura and Taneda indicate that N-substituted phenyl glycidyl carbamate would rearrange at elevated temperatures to 3-phenyl-5-hydroxytetrahydro-1,3-oxazin-2-one (J. Org. Chem, 24, 1992 (1959)). However, Farrisey and Nashu show that, when catalyzed by a tertiary amine, phenyl glycidyl carbamate rearranges at elevated temperatures to 3-phenyl-4-hydroxymethyl-2-oxazolidones (J. Heterocyl. Chem., 7, 331-333 (1970)).

The group of Chen et al. report the synthesis of glycidol-terminated polyurethanes (glycidyl carbamates) and find that they had good adhesion at low temperatures as well as good storage stability and room temperature curing (J. Appl. Polym. Sci., 51, 1199-1206 (1994)). A subsequent study shows that the glycidol-terminated polyurethanes have better impact strength, fracture energy, and adhesion than a conventional epoxy resin (J. Appl. Polym. Sci., 52, 1137-1151 (1994). In EP 0553701 A2, Rehfuss, et al. report a coating system made from reacting a polyisocyanate with glycidol to form the glycidyl carbamate resin and then curing it with a polyfunctional acid compound. Yeganeh et al. synthesized biodegradable epoxy terminated polyurethanes by end-capping of isocyanate terminated prepolymers with glycidol which are cured with diamines to make thermosets (Eur. Polym. J. 41, 2370-2379 (2005); J. Polym. Sci. A Polym. Chem. 43, 2985-2006 (2005)). Yeganeh et al. also report polyurethane elastomers made from isocyanate terminated prepolymers capped with glycidol were cured with a polyamic acid to form crosslinked elastomers (J. Appl. Polym. Sci. 103, 1776-1785 (2007)). Yeganeh et al. also studied the curing of epoxy polyurethanes using a novel phenolic functionalized polyamide resin (High Perf Polym. 20, 126-145 (2008)). Solouck et al. synthesized isocyanate terminated prepolymers from difunctional polyols and diisocyanates that were then end-capped with glycidol. These were cured with diamines to form crosslinked elastomers (Iran. J. Pharma. Sci., 4, 281-288 (2008)). Sun et al. studied the kinetics of the reaction of glycidol with isocyanate terminated prepolymers from aromatic and cycloaliphatic diisocyanates. The epoxy urethane terminated polymers were mixed with conventional BPA epoxy resins and cured and their underwater acoustic properties were studied (Polym. Bull. 69, 621-633 (2012)).

In a series of investigations, Webster et al. studied the synthesis of glycidyl carbamate-functional resins made from the reaction of glycidol with multifunctional polyisocyanates derived from 1,6-hexamethylene diisocyanate (HDI). In one paper, the synthesis of multifunctional resins and their curing with amines to form coatings was studied (JCT Research, 2, 517-528 (2005)). In another paper, the self-crosslinking reaction at elevated temperature was studied as were the properties of coatings cured with the self-crosslinking reaction (Prog. Org. Coat., 57, 128-139(2006)). It was also shown that modification of the polyisocyanates with monofunctional alcohols, followed by reaction with glycidol could be used to moderate the viscosity of the resins. The resulting products could be cured with amines or through self-crosslinking to form coatings (J. Coat. Tech. & Res., 7, 531-546 (2010); U.S. Pat. Nos. 9,051,413; and 9,593,258). Webster et al., also demonstrate in U.S. Pat. No. 8,852,458 that polyfunctional glycidyl-carbamate resins could be blended with conventional BPA epoxy resins to form corrosion resistant coatings. Glycidyl carbamate-functional resins could be rendered water dispersible by partial replacement of glycidol with polyethylene glycol and cured using waterborne amine-curing agents (J. Coat. Tech. Res., 6, 735-747 (2011); U.S. Pat. Nos. 7,776,956; and 9,676,895). To make highly flexible coatings linear glycidyl carbamate resins can be made and cured with amines (J. Coat. Tech. Res., 10(2), 141-151 (2012)). Hybrid sol-gel systems can also be synthesized by reactions with various silanes (Prog. Org. Coat., 66(1), 73-85 (2009); Prog. Org. Coat., 64(2-3) 128-137 (2009); Prog. Org. Coat., 63(4) 405-415 (2008); and U.S. Pat. No. 8,097,741).

All of these glycidyl carbamate resins are synthesized by reacting an isocyanate-functional material with glycidol. However, glycidol is very expensive and has various health hazards associated with it. Because thermosets made from glycidyl carbamate-functional resins have the potential to have very useful properties as coatings, adhesives and other materials, a method of making glycidyl carbamate-functional resins is needed that does not involve the use of glycidol.

### SUMMARY OF THE INVENTION

Accordingly, the present invention reduces or eliminates problems inherent in the art by providing epoxy-functional urethanes that are curable with amines at low temperatures. In one embodiment, the epoxy-functional urethane is a glycidyl carbamate resin. In another embodiment, the epoxy-functional urethane is made by reacting allyl alcohol or a compound containing a hydroxyl group and a vinyl group with an isocyanate-functional compound, followed by epoxidizing the allyl group or the vinyl group to an epoxy group. Coatings produced from the epoxy-functional urethanes of the invention can be applied to a variety of substrates.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first aspect, the present invention is directed to a curable coating composition comprising a reaction product of an epoxy-functional urethane compound and an amine-curing agent, wherein the curable coating composition cures between ambient temperature and 0°C.

In a second aspect, the present invention is directed to a process comprising applying the curable coating composition according to the previous paragraph to a substrate and curing the curable coating composition.

In a third aspect, the present invention is directed to a substrate coated with the curable coating composition according to the first aspect.

An alternative to using glycidol in the synthesis is to conduct a two-step process by first reacting the isocyanate with allyl alcohol and then oxidizing it to the epoxy group. Allyl alcohol is an inexpensive reagent that can be added to an isocyanate in a first step to form an allyl carbamate compound. In a second step, oxidation (epoxidation) of the double bond can convert the allyl carbamate into a glycidyl carbamate.

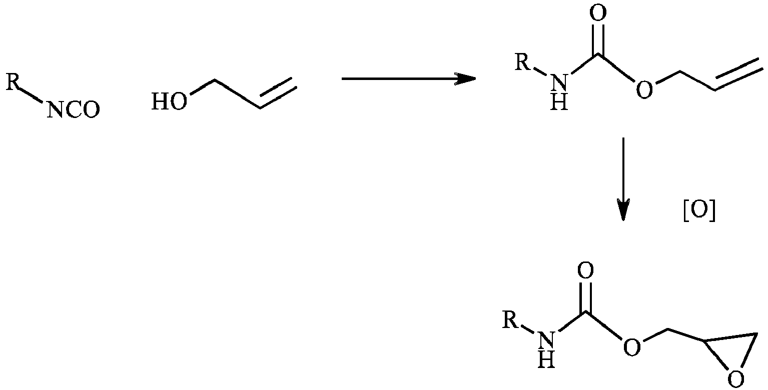

In another approach to the synthesis of epoxy-functional polyurethane resins, Ambrose et al., in U.S. Pat. Nos. 4,699,814 and 4,749,743 reported the reaction of isocyanate-functional compounds with a hydroxyl-functional polyepoxide having two or more epoxy groups per molecule. An example of a hydroxyl-functional polyepoxide is a diglycerol polyglycidyl ether having three epoxy groups per molecule.

The present inventors have discovered an entirely new approach to the synthesis of epoxy-functional polyurethanes that does not make use of glycidol and where the epoxy group and the carbamate group are separated by more than one atom. This approach also results in epoxy-functional urethanes having novel compositions.

The synthesis method involves a first reaction of an isocyanate-functional compound with a compound containing a hydroxyl group and one or more vinyl groups. Then the vinyl groups are oxidized to convert the double bonds to epoxy groups.

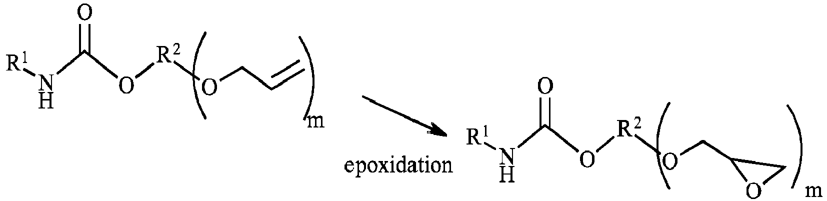

The glycidyl carbamate-functional compound is made as follows:

In a first step, an isocyanate-functional compound is reacted with allyl alcohol to form allyl carbamate. Although any isocyanate compound can be used, it is preferred to use isocyanate compounds that have two or more isocyanate groups, so that the final glycidyl carbamate-functional composition can be cured into a thermoset material. Example diisocyanate compounds include 1,6-hexamethylene diisocyanate, 2,4-toluene diisocyanate, 2,6-toluene diisocyanate and mixtures thereof, methylene diphenyl diisocyanate, isophorone diisocyanate, bis(4-isocyanatocyclohexyl) methane, tetramethylxylene diisocyanate, xylylene diisocyanate, hydrogenated xylylene diisocyanate, 2,2,4 and 2,4,4,- trimethyl-1,6-hexamethylene diisocyanate, and 4-isocyanatomethyl-1,8-octane diisocyanate. Polyisocyanate compounds can also be used including the biuret and isocyanurate adducts of diisocyanates, polyisocyanates made by reacting a polyol with a diisocyanate, uretdione adducts, and allophanate polyisocyanates.

Another type of polyisocyanate that can be used is one prepared by the free radical copolymerization of a compound containing an isocyanate and a carbon-carbon double bond that can be polymerized using a free radical chain growth polymerization. Examples are m-TMI (α,α-dimethyl meta-isopropenyl benzyl isocyanate) and isocyanato ethyl methacrylate (IEM). These monomers can be combined with others in a copolymerization to yield a polymer having multiple isocyanate groups.

The first step can occur in the absence or presence of solvent and in the absence of presence of a catalyst. Suitable solvents are toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, tetrahydrofuran, diethyl ether, dimethylsulfoxide, dimethyl formamide, and dimethylacetamide. It is preferred that the reaction occurs in the absence of solvent, or, if solvent is needed due to viscosity, to use a solvent that can be readily removed after the reaction is complete.

Catalysts for the reaction can include tin compounds such as dibutyl tin dilaurate, dibutyl tin diacetate, tertiary amines such as 1,4-diazabicyclo[2.2.2]octane (DABCO) and other metal salts based on bismuth, iron, zirconium, or zinc. It is preferred to carry out the reaction without a catalyst or with a tin-based catalyst.

After reacting the isocyanate, step two, involving oxidation of the double bond to an epoxide. The reaction occurs in a two-phase system. The allyl carbamate synthesized in step one is dissolved in a solvent. Preferably, the solvent is a ketone so that it can function as the source of ketone for the formation of the dioxirane. Solvents such as acetone, methyl ethyl ketone, methyl amyl ketone, and cyclohexanone can be used, with acetone being the preferred solvent. A mixture of a ketone and another solvent may also be used. Suitable solvents are those listed above for the isocyanate-allyl alcohol reaction.

A base in the aqueous phase maintains the needed basic conditions to stabilize the dimethyldioxirane. Inorganic bases such as sodium hydrogen carbonate (sodium bicarbonate), sodium hydroxide, sodium carbonate, potassium bicarbonate, potassium carbonate, potassium hydroxide, and the like can be used. Sodium bicarbonate is preferred.

The biphasic reaction mixture is stirred vigorously to create interfacial surface area between the organic and aqueous phases. Oxone is dissolved in water and added slowly to the reaction mixture. A slow addition rate is preferred to yield the highest conversion of allyl groups to glycidyl groups. The reaction may occur at temperatures ranging from 2 °C to 90 °C. Ambient temperature of 18°C to 25 °C is preferred.

Optionally, a phase transfer catalyst can be used. Suitable phase transfer catalysts include tetrabutyl ammonium hydrogen sulfate, quaternary ammonium compounds such as benzyl triethyl ammonium chloride, and the like. Ionic liquids can also function as phase transfer compounds such as 1-dodecyl-3-methylimidazolium tetrafluoroborate (DoDMIImBF₄). Crown ethers such as 18-crown-6 can also be used as a phase transfer catalyst.

After completion of the reaction, an organic solvent is added to extract the product from the reaction mixture and the organic and aqueous layers are allowed to separate. The organic layer is washed several times with aqueous sodium chloride and the organic layer is separated from the aqueous layer and the solvent removed by evaporation to yield the glycidyl carbamate compound.

The epoxy-urethane compounds of the invention are made as follows:

In a first step, an isocyanate-functional compound is reacted with a compound containing a hydroxyl group and a vinyl group to form a vinyl-functional carbamate. Although any isocyanate compound can be used, it is preferred to use isocyanate compounds that have two or more isocyanate groups, so that the final glycidyl carbamate-functional composition can be cured into a thermoset material. Example diisocyanate compounds include 1,6-hexamethylene diisocyanate, 2,4-toluene diisocyanate, 2,6-toluene diisocyanate and mixtures thereof, methylene diphenyl diisocyanate, isophorone diisocyanate, bis(4-isocyanatocyclohexyl) methane, tetramethylxylene diisocyanate, xylylene diisocyanate, hydrogenated xylylene diisocyanate, 2,2,4 and 2,4,4,- trimethyl-1,6-hexamethylene diisocyanate, and 4-isocyanatomethyl-1,8-octane diisocyanate. Polyisocyanate compounds can also be used including the biuret and isocyanurate adducts of diisocyanates, polyisocyanates made by reacting a polyol with a diisocyanate, uretdione adducts, and allophanate polyisocyanates.

Another useful type of polyisocyanate is one prepared by free radical copolymerization of a compound containing an isocyanate and a carbon-carbon double bond that can be polymerized using a free radical chain growth polymerization. Examples are m-TMI (α,α-dimethyl meta-isopropenyl benzyl isocyanate) and isocyanato ethyl methacrylate (IEM). These monomers can be combined with others in a copolymerization to yield a polymer having multiple isocyanate groups.

Examples of compounds having one hydroxyl group and one or more vinyl groups are trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol, and the like.

The first step can occur in the absence or presence of solvent and in the absence or presence of a catalyst. Suitable solvents are toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, tetrahydrofuran, diethyl ether, dimethylsulfoxide, dimethyl formamide, and dimethylacetamide. It is preferred to carry out the reaction in the absence of solvent, or, if solvent is needed due to viscosity, to use a solvent that can be readily removed after the reaction is complete.

Catalysts for the reaction can include tin compounds such as dibutyl tin dilaurate, dibutyl tin diacetate, tertiary amines such as 1,4-diazabicyclo[2.2.2]octane (DABCO) and other metal salts based on bismuth, zirconium, or zinc. It is preferred to carry out the reaction without catalyst or with a tin-based catalyst.

After reacting the isocyanate, step two, involving oxidation of the double bond to an epoxide occurs. The reaction is a two-phase system. The allyl carbamate synthesized in step one is dissolved in a solvent. Preferably the solvent is a ketone so that it can function as the source of ketone for the formation of the dioxirane. Solvents such as acetone, methyl ethyl ketone, methyl amyl ketone, and cyclohexanone can be used, with acetone being the preferred solvent. A mixture of a ketone and another solvent may also be used. Suitable solvents are those listed above for the isocyanate-allyl alcohol reaction.

A base in the aqueous phase maintains basic conditions to stabilize the dimethyldioxirane. Inorganic bases such as sodium hydrogen carbonate (sodium bicarbonate), sodium hydroxide, sodium carbonate, potassium bicarbonate, potassium carbonate, potassium hydroxide, and the like can be used. Sodium bicarbonate is preferred.

The biphasic reaction mixture is stirred vigorously to create interfacial surface area between the organic and aqueous phases. Oxone is dissolved in water and added slowly to the reaction mixture. A slow addition rate is preferred to yield the highest conversion of allyl groups to glycidyl groups. The reaction can occur at temperatures ranging from 2 °C to 90 °C. Ambient temperature of 18 °C to 25 °C is preferred.

Optionally, a phase transfer catalyst can be used. Suitable phase transfer catalysts include tetrabutyl ammonium hydrogen sulfate, quaternary ammonium compounds such as benzyl triethyl ammonium chloride, and the like. Ionic liquids can also function as phase transfer compounds such as 1-dodecyl-3-methylimidazolium tetrafluoroborate (DoDMIImBF₄). Crown ethers such as 18-crown-6 can also be used as a phase transfer catalyst.

After completion of the reaction, an organic solvent is added to extract the product from the reaction mixture and the organic and aqueous layers are allowed to separate. The organic layer is washed several times with aqueous sodium chloride, the organic layer is separated from the aqueous layer, and the solvent removed by evaporation to yield the glycidyl-carbamate resin.

Curable formulations may be prepared with the glycidyl-carbamate or epoxy-urethane resin and an amine-curing agent and, optionally, catalysts, solvents, additives, pigments.

Suitable amine-curing agents are those which are soluble or miscible in a coating composition of the invention. Amine-curing agents known in the art include, for example, diethylenetriamine, triethylenetetramine, tetraethylene-pentamine, etc. as well as 2,2,4- and/or 2,4,4-trimethylhexamethylenediamine, 1,2- and 1,3-diaminopropane, 2,2-dimethylpropylenediamine, 1,4-diaminobutane, 1,6-hexanediamine, 1,7-diaminoheptane, 1,8-diaminooctane, 1,9-diaminononae, 1,12-diaminododecane, 4-azaheptamethylenediamine, N,N"-bis(3-aminopropyl)butane-1,4-diamine, 1-ethyl-1,3-propanediamine, 2,2(4),4-trimethyl-1,6-hexanediamin, bis(3-aminopropyl)piperazine, N-aminoethylpiperazine, N,N-bis(3-aminopropyl)ethylenediamine, 2,4(6)-toluenediamine, dicyandiamine, melamine formaldehyde, tetraethylenepentamine, 3-diethylaminopropylamine, 3,3"-iminobispropylamine, tetraethylenepentamine, 3-diethylaminopropylamine, and 2,2,4- and 2,4,4-trimethylhexamethylenediamine. Exemplary cycloaliphatic amine-curing agents include, but are not limited to, 1,2- and 1,3-diaminocyclohexane, 1,4-diamino-2,5-diethylcyclohexane, 1,4-diamino-3,6-diethylcyclohexane, 1,2-diamino-4-ethylcyclohexane, 1,4-diamino-2,5-diethylcyclo-hexane, 1,2-diamino-4-cyclohexylcyclohexane, isophorone-diamine; norbornanediamine, 4,4'-diaminodicyclohexylmethane, 4,4'-diaminodicyclohexylethane, 4,4'-diaminodicyclohexylpropane, 2,2-bis(4-aminocyclohexyl)propane, 3,3'-dimethyl-4,4'-diaminodicyclohexylmethane, 3-amino-1-(4-aminocyclohexyl)propane, 1,3- and 1,4-bis(aminomethyl)cyclohexane, and 1-cyclohexyl-3,4-dimino-cyelohexane. As exemplary araliphatic amines, in particular those amines are employed in which the amino groups are present on the aliphatic radical for example m- and p-xylylenediamine or their hydrogenation products as well as diamide diphenylmethane; diamide diphenylsulfonic acid (amine adduct), 4,4"-methylenedianiline, 2,4-bis(p-aminobenzyl)aniline, diethyltoluenediamine, and m-phenylene diamine. The amine-curing agents may be used alone or as mixtures.

Suitable amine-epoxide adducts are, for example, reaction products of diamines such as, for example, ethylenediamine, diethylenetriamine, triethylenetetramine, m-xylylenediamine and/or bis(aminomethyl)cyclohexane with terminal epoxides such as, for example, polyglycidyl ethers of polyhydric phenols listed above.

Preferably, amine-curing agents used with the coating formulations of the invention are PACM (bis(para-aminocyclohexyl)methane), diethylene triamine (DETA), and 4,4'-methylene dianiline (MDA). Stoichiometry ratios of amine to oxirane of the coating compositions may be based on amine hydrogen equivalent weight (AHEW) and on weight per epoxide (WPE). A formulation of 1:1 was based on one epoxide reacted with one amine active hydrogen.

The thermosets made from the invention may be useful for the production of coatings, adhesives, and composites.

Solvents may be used in the formulation of the thermosets. Suitable solvents can include toluene, xylenes, n-butyl acetate, t-butyl acetate, amyl acetate, acetone, methyl ethyl ketone, methyl amyl ketone, dihydrolevoglucosenone (CYRENE), N-methyl 2-pyrrolidone, N-ethyl-2-pyrrolidone, ethyl ethoxy propionate, tetrahydrofuran, diethyl ether, dimethylsulfoxide, dimethyl formamide, and dimethylacetamide.

Curing can occur at ambient conditions or at low temperatures. By low temperatures, the present inventors mean temperatures lower than room temperature, in some embodiments, between ambient temperature and 0 °C, in certain embodiments between 20 °C and 2 °C, in selected embodiments between 10 °C and 4 °C.

A coating composition of the invention may further contain at least one coating additive to, for example, enhance the composition's coating efficiency. Examples of suitable coating additives include, but are not limited to, leveling and flow control agents such as silicones, fluorocarbons or cellulosics; extenders; plasticizers; flattening agents; pigment wetting and dispersing agents; ultraviolet (UV) absorbers; UV light stabilizers; defoaming and antifoaming agents; anti-settling, anti-sag and bodying agents; anti-skinning agents; anti-flooding and anti-floating agents; and corrosion inhibitors. Specific examples of such additives can be found in Raw Materials Index, published by the National Paint & Coatings Association, 1500 Rhode Island Avenue, N.W., Washington, D.C. 20005. Further examples of such additives may be found in U.S. Pat. No. 5,371,148.

Examples of flattening agents include, but are not limited to, synthetic silica, available from the Davison Chemical Division of W. R. Grace & Company as SYLOID; polypropylene, available from Hercules Inc., as HERCOFLAT; synthetic silicate, available from J. M. Huber Corporation, as ZEOLEX.

Examples of viscosity, suspension, and flow control agents include, but are not limited to, polyaminoamide phosphate, high molecular weight carboxylic acid salts of polyamine amides, and alkylene amine salts of an unsaturated fatty acid, all available from BYK Chemie U.S.A. as ANTI TERRA. Further examples include, but are not limited to, polysiloxane copolymers, polyacrylate solution, cellulose esters, hydroxyethyl cellulose, hydroxypropyl cellulose, polyamide wax, polyolefin wax, hydroxypropyl methyl cellulose, polyethylene oxide, and the like.

Where formulated as a coating, the inventive compositions may be applied to various substrates including, but not limited to, metals (e.g. aluminum, steel), plastics, ceramics, glass, natural materials, and concrete. The substrates may optionally be cleaned prior to coating to remove processing oils or other contaminants. The substrates may also be pretreated to improve adhesion and corrosion resistance. Additionally, a primer may be applied first to the substrate followed by application of the coating of the invention. Alternatively, the coating of the invention can be applied to the substrate first, followed by a topcoat of another or similar material.

The compositions of the invention may be contacted with a substrate by any methods known to those skilled in the art, including but not limited to, spraying, dipping, flow coating, rolling, brushing, pouring, squeegeeing, and the like. In some embodiments, the inventive compositions may be applied in the form of paints or lacquers onto any compatible substrate. In certain embodiments, the inventive composition is applied as a single layer. In other embodiments, the composition of the present invention may be applied as multiple layers as needed.

### EXAMPLES

The non-limiting and non-exhaustive examples that follow are intended to further describe various non-limiting and non-exhaustive embodiments without restricting the scope of the embodiments described in this specification. Although described herein in the context of a coating, those skilled in the art will recognize that the principles of the present invention are equally applicable to adhesives, sealants, films, elastomers, castings, foams, and composites. All quantities given in "parts" and "percents" are understood to be by weight, unless otherwise indicated. For the purpose of mass to mole conversions, reagents with purity of 99% or higher are considered to be 100% pure.
- POLYISO A: an allophanate-modified polyisocyanate based on hexamethylene diisocyanate (HDI), commercially available from Covestro LLC (Pittsburgh, PA) as DESMODUR XP 2580 (19.3% NCO);
- ALLYL ALCOHOL A: commercially available from Sigma-Aldrich;
- ALLYL ETHER A: trimethylolpropane diallyl ether, commercially available from Perstorp Holding AB, Sweden as TMPDE 90;
- EPOXY RESIN B: a difunctional bisphenol A/epichlorohydrin derived liquid epoxy resin, commercially available from Hexion as EPON 828;
- CATALYST A: dibutyltin dilaurate 95% (DBTDL), one drop is ~ 20-30 mg, commercially available from Sigma-Aldrich;
- OXIDANT A: potassium peroxysulfate (OXONE), commercially available from Alfa Aesar;
- BASE A: sodium hydrogen carbonate, commercially available from Alfa Aesar;
- SOLVENT A: acetone, commercially available from Alfa Aesar;
- SOLVENT B: dichloromethane, commercially available from Alfa Aesar;
- SOLVENT C: ethyl acetate, commercially available from Alfa Aesar;
- SOLVENT D: ethylene glycol butyl ether, commercially available from Eastman Chemical Company;
- CROSSLINKER A: para-aminocyclohexyl methane (PACM) commercially available from Evonik;
- DI water: de-ionized water;
- MEK: methyl ethyl ketone, commercially available from VWR International; and
- BRINE: saturated aqueous solution of NaCl, prepared by dissolving 500 g NaCl (certified ACS, Sigma-Aldrich) into 1 L of DI water at room temperature.

The following methods are used in the examples for the characterization of the compounds synthesized and materials prepared.

FTIR measurements were done by a THERMO NICOLET 8700 FTIR spectrometer. Spectra acquisitions were based on 64 scans with data spacing of 4.0 cm⁻¹ in the range of 4000-500 cm⁻¹. NMR measurements were done at 25 °C using BRUKER AVANCE 400 MHz instrument and processed with TOPSPIN software. All measurements were made using CDCl₃ as solvent. The bulk viscosity of samples was measured using an ARES Rheometer at room temperature. Epoxide equivalent weight (EEW, g/eq) of the epoxy products was determined by epoxy titration according to ASTM D1652-11 (2019).

### Ex. 1 - Synthesis of POLYISO A-GLYCIDYL CARBAMATE A RESIN

### Step one: Synthesis of allyl carbamate resin

ALLYL ALCOHOL A (59.21g. 1.02 mol) and three drops of CATALYST A were added to a 1000 mL three-neck flask equipped with a mechanical stirring apparatus and a 250 mL addition funnel. POLYISO A (251.10g, 1 mol) was added into addition funnel and SOLVENT B (30 mL) was used to transfer all the POLYISO A into the addition funnel. POLYISO A was added dropwise into the flask. After the addition was finished, about 10 mL SOLVENT B was added into the addition funnel to wash any remaining POLYISO A into the reaction flask. The reaction mixture was kept stirring until all isocyanate groups were consumed which was determined by FTIR. After the reaction was completed, SOLVENT B was removed by vacuum. The residue was used for epoxidation without further purification.

¹H NMR (400 MHz, CDC13) δ 8.64 - 8.36 (m), 5.98 - 5.64 (m), 5.29 - 5.21 (m), 5.16 (dd, J = 12.9, 5.1 Hz), 5.06 (d, J = 10.3 Hz), 4.37 (t, J = 31.0 Hz), 4.13 - 3.91 (m), 3.81 - 3.67 (m), 3.66 - 3.51 (m), 3.24 - 3.09 (m), 3.09 (s), 1.66 - 1.48 (m), 1.48 - 1.33 (m), 1.31 - 1.10 (m), 0.96 - 0.68 (m).

¹³C NMR (101 MHz, CDC13) δ 156.30, 156.24, 154.39, 148.90, 133.08, 117.18, 68.07, 66.60, 66.31, 65.14, 43.46, 42.68, 40.71, 40.25, 30.49, 29.72, 29.66, 29.37, 28.92, 28.14, 27.94, 27.57, 26.41, 26.23, 26.16, 26.11, 22.10, 21.88, 19.02, 13.85, 13.53, 10.34.

ATR-FTIR (neat) 3333, 2932, 2859, 1683, 1527, 1461, 1404, 1361, 1239, 1181, 1136, 1032, 991, 928, 777, 765, 733 cm⁻¹.

### Step two: Epoxidation of allyl carbamate resin

The POLYISO A-ALLYL CARBAMATE A made in step one, SOLVENT A (1.5L), and BASE A (503.65g, 6 mol) were added to a 12 L three-neck round bottom flask equipped a mechanical stirring apparatus. OXIDANT A (1223g, 4 mol in about 4.8L DI) was added into the reaction mixture by a piston pump at an addition rate from 2 mL/min to 4 mL/ min over about 72 hours. After the addition of OXIDANT A was completed, the reaction mixture was kept stirring for another hour. SOLVENT C (1.5L) was added into flask. The reaction mixture was kept stirring for additional ten minutes to let the product dissolve in SOLVENT C. After the dissolution was complete, the clear solution was transferred to a separate funnel. The water layer was washed with SOLVENT C (200 mL). The combined SOLVENT C was washed using BRINE (3 x 225 mL). The light yellow and clear SOLVENT C was dried by magnesium sulfate. After removing SOLVENT C by rotary evaporator and vacuum oven, 290g (100% yield) resin was obtained. The carbon-carbon double bond conversion was 100% analyzed by ¹³C NMR spectroscopy.

¹H NMR (400 MHz, CDCl₃) δ 8.55 - 8.26 (m), 5.46 (t, J = 19.3 Hz), 4.23 (ddd, J = 13.5, 9.1, 3.0 Hz), 4.01 - 3.93 (m), 3.74 - 3.56 (m), 3.51 (s), 3.11 - 3.00 (m), 2.94 (dt, J = 12.9, 4.7 Hz), 2.67 - 2.54 (m), 2.41 (dd, J = 4.6, 2.5 Hz), 1.60 - 1.37 (m), 1.37 - 1.25 (m), 1.25 - 1.07 (m), 0.75 (ddd, J = 23.7, 13.3, 7.2 Hz).

¹³C NMR (101 MHz, CDCl₃) δ 156.09, 154.30, 148.88, 67.98, 66.22, 65.15, 64.98, 49.67, 49.54, 49.49, 44.24, 43.36, 42.55, 40.68, 40.63, 40.15, 30.60, 30.39, 29.52, 29.46, 29.26, 28.81, 28.03, 27.85, 27.45, 26.30, 26.13, 26.05, 26.02, 22.00, 21.78, 18.93, 13.75, 13.43, 10.25.

ATR-FTIR (neat) 3334, 2922, 2860, 1682,1526, 1462, 1404, 1372, 1237, 1181, 1142, 1022, 908, 858, 765, 729cm⁻¹.

### Ex. 2 - Synthesis of POLYISO A-EPOXY RESIN A

A mixture containing ALLYL ETHER A (83.6 g, 0.39 mol) and five drops of CATALYST A was stirred at room temperature. POLYISO A (75 g, 0.349 mol) was added dropwise. After completion of the dropwise addition, the reaction solution was stirred at room temperature overnight. Infrared spectroscopic analysis was performed to determine reaction completion by monitoring the disappearance of isocyanate peak at 2275 cm⁻¹. The resulting POLYISO A-ALLYL ETHER A CARBAMATE was directly used for the next step without purification.

ATR-FTIR (neat) 3335, 2933, 2859, 1712, 1689, 1530, 1461, 1404, 1351, 1240, 1181, 1135, 1088, 991, 920, 752, 665cm⁻¹.

The solution of POLYISO A-ALLYL ETHER A CARBAMATE in SOLVENT A (650mL) was transferred to a 5000 mL, three-neck round bottom flask equipped with a mechanical stirring apparatus. BASE A (371 g) was added. OXIDANT A (905 g/3.5 L DI) was added dropwise at a flowrate of 1-2 mL min⁻¹ using a pump at room temperature. After dropwise addition, the reaction solution was stirred at room temperature for another two hours. The reaction mixture was liquid-liquid extracted with SOLVENT C (3 x 650 mL). The organic layer was separated and washed with saturated BRINE (3 x 200 mL) and evaporated. The carbon-carbon double bond conversion was about 100% (analyzed by ¹³C NMR spectroscopy) and the yield was approximately 100%. The viscosity of the resulting POLYISO A-EPOXY RESIN A was 41826 mPa·s.

¹H NMR (400 MHz) δ 3.88 (dd, J = 11.0, 4.9 Hz, 2H), 3.72 (s, 2H), 3.66 - 3.51 (m, 3H), 3.39 - 3.08 (m, 8H), 2.99 (dd, J = 7.5, 4.4 Hz, 4H), 2.72 - 2.57 (m, 2H), 2.52 - 2.39 (m, 2H), 1.67 - 1.14 (m, 17H), 0.74 (m 3H).

¹³C NMR (400 MHz) δ 157.27, 156.71, 156.32, 154.45, 148.96, 71.94, 71.34, 50.95, 44.01, 42.64, 27.66, 26.23, 22.71, 7.55, 7.41.

ATR-FTIR (neat) 3337, 2933, 2859, 1711, 1686, 1529, 1463, 1404, 1373, 1338, 1239, 1182, 1098, 1044, 908, 848, 778, 765.

### Low temperature curing study

Impact tests were measured according to ASTM D2794-93 (2019) using a BYK-GARDNER HEAVY DUTY IMPACT TESTER MODEL IG-1120, which an 1.8 kg (4 lb.) mass and 1.27 cm (0.5 inch) diameter round-nose punch. MEK double rubs of the cured film were done in accordance with ASTM D5402-19. Coatings that passed 400 double rubs without mar were considered fully cured. The film thickness was measured with a BYKO-TEST 8500. Konig pendulum hardness and pencil hardness were measured according to ASTM D4366-16 (2021) and ASTM D3363-20, respectively. The adhesion of coatings on steel substrate was evaluated using crosshatch adhesion according to ASTM D3359-17.

EPOXY RESIN B was mixed with CROSSLINKER A at the different molar ratios as given in the Tables below without using extra solvent. Coating formulations were applied on to iron phosphate pretreated 22-gauge steel test panels purchased from Q-panel. Coating application was made using a drawdown bar for a final dry film thickness of approximately 50 µm.

POLYISO A-GLYCIDYL CARBAMATE RESIN synthesized in Ex. 1 was mixed with CROSSLINKER A at the molar ratios given in the Tables below without using extra solvent. Coating formulations were applied on to iron phosphate pretreated 22-gauge steel test panels purchased from Q-panel. Coating application was made using a drawdown bar for a final dry film thickness of approximately 50 µm.

POLYISO A-ALLYL ETHER A resin synthesized in Ex. 2 was mixed with CROSSLINKER A at the molar ratios given in the Tables below without using extra solvent. Coating formulations were applied on to iron phosphate pretreated 22-gauge steel test panels purchased from Q-panel. Coating application was made using a drawdown bar for a final dry film thickness of approximately 50 microns.

The coated panels were placed in ESX-2CA TEMPERATURE/HUMIDITY CHAMBER at 4 °C, 80% relative humidity. MEK double rubs and pencil hardness were checked after one day, five days, seven days and 14 days and are reported in Table I. After 14 days of curing, complete coating evaluation was carried out and is reported in Table II.

As those skilled in the art will appreciate, the data in Table I clearly indicated that the epoxy-urethane coatings developed solvent resistance over time at 4 °C while the bisphenol-A epoxy resin (EPOXY RESIN B) coatings did not develop solvent resistance under the low temperature conditions.

**Table I**

| **Time** | **Test** | **EPOXY RESIN A** | | | **POLYISO A-GC** | | | **POLYISO A-ALLYL ETHER A** | | |
|---|---|---|---|---|---|---|---|---|---|---|
| | | **Molar ratio w/ CROSSLINKER A** | | | **Molar ratio w/ CROSSLINKER A** | | | **Molar ratio w/ CROSSLINKER A** | | |
| | | **1:1** | **1:1.5** | **1:2** | **1:1** | **1:1.5** | **1:2** | **1:1** | **1:1.5** | **1:2** |
| 1 day | tack | Tack free | Tack free | Tack free | Sticky | Sticky | Tack free | Sticky | Sticky | Tack free |
| | PH | 3B | 4B | 4B | <6B | <6B | <6B | <6B | <6B | 6B |
| 5 days | MEK | 3 | 1 | 1 | 10 | 15 | 1 | 8 | 40 | 1 |
| | PH | B | HB | HB | <6B | 5B | 6B | <6B | <6B | 6B |
| 7 days | MEK | 2 | 2 | 2 | 45 | 180 | 1 | 165 | 250 | 100 |
| | PH | HB | HB | HB | 6B | 3B | 5B | 6B | 6B | 5B |
| 14 days | MEK | 2 | 2 | 4 | >400 | >400 | 15 | 380 | 270 | >400 |
| | PH | HB | HB | HB | 6B | 3B | 5B | 3B | 3B | B |

| | | | | | | | | | | |
|---|---|---|---|---|---|---|---|---|---|---|
| PH = Pencil Hardness GC = GLYCIDYL CARBAMATE | | | | | | | | | | |

**Table II**

| **Test** | **EPOXY RESIN A** | | | **POLYISO A-GC** | | | **POLYISO A-ALLYL ETHER A** | | |
|---|---|---|---|---|---|---|---|---|---|
| | **Molar ratio w/ CROSSLINKER A** | | | **Molar ratio w/ CROSSLINKER A** | | | **Molar ratio w/ CROSSLINKER A** | | |
| | **1:1** | **1:1.5** | **1:2** | **1:1** | **1:1.5** | **1:2** | **1:1** | **1:1.5** | **1:2** |
| Pencil Hardness | HB | HB | HB | 6B | 3B | 5B | 3B | 3B | B |
| Crosshatch | 0B | 0B | 0B | 5B | 5B | 5B | 5B | 5B | 5B |
| Thickness (µm) | 73 | 77 | 58 | 116 | 91 | 97 | 75 | 88 | 138 |
| MEK | 2 | 2 | 1 | >400 | >400 | 15 | 380 | 270 | >400 |
| Konig Hardness (s) | 178 | 141 | 168 | 63 | 64 | 17 | 79 | 102 | 43 |
| Impact (inch-lb) | 0 | 0 | 4 | 172 | 172 | 172 | 172 | 172 | 16 |

| | | | | | | | | | |
|---|---|---|---|---|---|---|---|---|---|
| GC = GLYCIDYL CARBAMATE | | | | | | | | | |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:
Clause 1. A curable coating composition comprising a reaction product of an epoxy-functional urethane compound and an amine-curing agent, wherein the curable coating composition cures between ambient temperature and 0 °C.
Clause 2. The curable coating composition according to Clause 1, wherein the epoxy-functional urethane compound comprises a glycidyl carbamate-functional compound.
Clause 3. The curable coating composition according to one of Clauses 1 and 2, wherein the epoxy-functional urethane compound comprises a reaction product of a polyisocyanate with allyl alcohol, in which an allyl group is subsequently epoxidized to a glycidyl group.
Clause 4. The curable coating composition according to one of Clauses 1 and 2, wherein the epoxy-functional urethane compound comprises a reaction product of a polyisocyanate with a compound containing a hydroxyl group and one or more vinyl groups, and wherein an vinyl group is oxidized to an epoxy group.
Clause 5. The curable coating composition according to Clause 4, wherein the compound containing a hydroxyl group and one or more vinyl groups is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol.
Clause 6. The curable coating composition according to any one of Clauses 3 to 5, wherein the polyisocyanate is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methylcyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, m-TMI (α,α-dimethyl meta-isopropenyl benzyl isocyanate) and isocyanato ethyl methacrylate (IEM), isomers of any of these, and mixtures of any of these.
Clause 7. The curable coating composition according to any one of Clauses 1 to 6, wherein the amine-curing agent is selected from the group consisting of bis(para-aminocyclohexyl)methane (PACM), diethylene triamine (DETA), and 4,4'-methylene dianiline (MDA), isomers of any of these, and mixtures of any of these.
Clause 8. The curable coating composition according to any one of Clauses 1 to 6, wherein the curable coating composition cures between 20 °C and 2 °C.
Clause 9. The curable coating composition according to any one of Clauses 1 to 8, wherein the curable coating composition cures between 10 °C and 4 °C.
Clause 10. A process comprising applying the curable coating composition according to any one of Clauses 1 to 9 to a substrate and curing the curable coating composition.
Clause 11. The process according to Clause 8, wherein curing occurs between ambient temperature and 0 °C.
Clause 12. The process according to one of Clauses 10 and 11, wherein curing occurs between 20 °C and 2 °C.
Clause 13. The process according to any one of Clauses 10 to 12, wherein curing occurs between 10 °C and 4 °C.
Clause 14. A substrate coated with the composition according to any one of Clauses 1 to 9.
Clause 15. The substrate according to Clause 14, wherein the substrate is selected from the group consisting of metals, plastics, ceramics, glass, natural materials, and concrete.
Clause 16. The substrate according to one of Clauses 14 and 15, wherein the coating is cured with an amine-curing agent selected from the group consisting of bis(para-aminocyclohexyl)methane (PACM), diethylene triamine (DETA), and 4,4'-methylene dianiline (MDA), isomers of any of these, and mixtures of any of these.

## Claims

1. A curable coating composition comprising a reaction product of an epoxy-functional urethane compound and an amine-curing agent, wherein the curable coating composition cures between ambient temperature and 0 °C.

2. The curable coating composition according to claim 1, wherein the epoxy-functional urethane compound comprises a glycidyl carbamate-functional compound.

3. The curable coating composition according to one of claims 1 and 2, wherein the epoxy-functional urethane compound comprises a reaction product of a polyisocyanate with allyl alcohol, in which an allyl group is subsequently epoxidized to a glycidyl group.

4. The curable coating composition according to one of claims 1 and 2, wherein the epoxy-functional urethane compound comprises a reaction product of a polyisocyanate with a compound containing a hydroxyl group and one or more vinyl groups, and wherein an vinyl group is oxidized to an epoxy group.

5. The curable coating composition according to claim 4, wherein the compound containing a hydroxyl group and one or more vinyl groups is selected from the group consisting of trimethylolpropane diallyl ether, ethylene glycol monoallyl ether, 3-butene-1-ol, 4-pentene-1-ol, 4-methyl-3-pentene-1-ol, 5-hexene-1-ol, 4-hexene-1-ol, 3-hexene-1-ol, 4-methyl-3-hexene-1-ol, 2-ethyl-4-pentene-1-ol, oleyl alcohol.

6. The curable coating composition according to any one of claims 3 to 5, wherein the polyisocyanate is selected from the group consisting of 1,4-tetramethylene diisocyanate, 1,6-hexamethylene diisocyanate, 2,2,4-trimethyl-1,6-hexamethylene diisocyanate, 2,4,4-trimethyl-1,6-hexamethylene diisocyanate, 1,12-dodecamethylene diisocyanate, cyclohexane-1,3-diisocyanate, cyclohexane-1,4-diisocyanate, 1-isocyanato-2-isocyanato-methyl cyclopentane, 1-isocyanato-3,3,5-trimethyl-5-isocyanato-methylcyclohexane, bis-(4-isocyanatocyclohexyl)methane, 1,3-bis(isocyanatomethyl)-cyclohexane, 1,4-bis(isocyanatomethyl)-cyclohexane, bis-(4-isocyanato-3-methyl-cyclohexyl)-methane, α,α,α',α'-tetramethyl-1,3-xylene diisocyanate, α,α,α',α'-tetramethy-1,4-xylene diisocyanate, 1-isocyanato-1-methyl-4(3)-isocyanato-methyl cyclohexane, 2,4-hexahydrotoluene diisocyanate, 2,6-hexahydrotoluene diisocyanate, toluene diisocyanate, diphenylmethane diisocyanate, pentane diisocyanate, m-TMI (α,α-dimethyl meta-isopropenyl benzyl isocyanate) and isocyanato ethyl methacrylate (IEM), isomers of any of these, and mixtures of any of these.

7. The curable coating composition according to any one of claims 1 to 6, wherein the amine-curing agent is selected from the group consisting of bis(para-aminocyclohexyl)methane (PACM), diethylene triamine (DETA), and 4,4'-methylene dianiline (MDA), isomers of any of these, and mixtures of any of these.

8. The curable coating composition according to any one of claims 1 to 6, wherein the curable coating composition cures between 20 °C and 2 °C.

9. The curable coating composition according to any one of claims 1 to 8, wherein the curable coating composition cures between 10 °C and 4 °C.

10. A process comprising applying the curable coating composition according to any one of claims 1 to 9 to a substrate and curing the curable coating composition.

11. The process according to claim 10, wherein curing occurs between ambient temperature and 0 °C, preferably between 20 °C and 2 °C, most preferably between 10 °C and 4 °C.

12. A substrate coated with the composition according to any one of claims 1 to 9.

13. The substrate according to claim 12, wherein the substrate is selected from the group consisting of metals, plastics, ceramics, glass, natural materials, and concrete.

14. The substrate according to one of claims 12 and 13, wherein the coating is cured with an amine-curing agent selected from the group consisting of bis(para-aminocyclohexyl)methane (PACM), diethylene triamine (DETA), and 4,4'-methylene dianiline (MDA), isomers of any of these, and mixtures of any of these.
